# EUROPEAN PATENT SPECIFICATION

(11) **EP 2 952 290 B1**
(45) Date of publication and mention of the grant of the patent: **04.01.2017**
(21) Application number: 15001650.9
(22) Date of filing: 03.06.2015
(51) Int. Cl.: B23Q 5/34, B23Q 5/38, B23Q 5/52, B23Q 16/00, B23Q 16/08, B23Q 17/00

(54) **SLED DEVICE FOR LINEARLY MOVING AN EQUIPMENT**
Schlitten zum linearen Verfahren einer Ausrüstung
traîneau pour deplace linéaire d`un dispositif

(30) Priority: 04.06.2014 IT TO20140450
(43) Date of publication of application: 09.12.2015
(73) Proprietor: VEP Automation S.r.l., 10092 Beinasco (Torino) (IT); Audi AG, 85045 Ingolstadt (DE)
(72) Inventor: Varetto, Ener, 10057 Sant'Ambrogio (Torino) (IT); Piccolo, Lio, 10095 Grugliasco (Torino) (IT); Knodel, Wilhelm, 85107 Baar-Ebenhausen (DE); Dorner, Reinhard, 85077 Manching (DE)
(74) Representative: Cian, Paolo

(56) References cited:
- DE-A1- 19 649 322
- GB-A- 687 999

## Description

The present invention relates generally to devices adapted to move a working equipment, in particular in the context of machines used, for example, for manufacturing motor vehicle body parts.

More particularly, the invention relates to a device of the type mentioned in the preamble of appended claim 1.

GB-687 999, on which said preamble is based, relates to a machine tool such as a lathe provided with a movable sled for moving a work piece to be worked relative to a tool, which movement is limited by a stopping member. This stopping member allows connection between the movable part and a stationary part of the machine tool to be interrupted, when the movable part reaches a limit position defined by the stopping member, in which position the movable part is applied against the stopping member. The force needed to apply the movable part against the stopping member can be derived from the same source of power used to move the movable part, which may consists in a hydraulic or electromagnetic device, or by a series of springs.

Devices adapted to move linearly an equipment, as a result of the movement of a rod of a cylinder driven by a pressurized fluid, are known, in which a stopping unit allows the cylinder rod to be locked, for example when it reaches one end-of-stroke position, or when a pressure drop below a predetermined threshold occurs in the feeding system.

In the more general case, these devices are designed to move a specific equipment in the context of a determined working plant and, therefore, they have a fixed size that corresponds to that required for their use. For this reason, the known linear moving devices are not much flexible since they cannot be easily adapted to different requirements of use, for example to be used in other working plants different from those for which they have been originally designed.

In addition, the stopping units of these known devices are usually low accurate and low reliable because the locking members of the rod of the control cylinder, which usually consists of rollers or balls adapted to apply a frictional force on the outer surface of the rod, do not allow an instantaneous stopping of the cylinder rod to be obtained, also owing to the fact that their accuracy is affected by wearing of their components, which can be a source of problems.

The main object of the present invention is to propose a sled device for linearly moving an equipment, the structure of which can be modified in a simple manner to be fitted to different use conditions, for example to allow it to be used in different working plants.

This object is reached by virtue of a sled device having the features mentioned in appended claim 1.

In particular, the device includes detection means for detecting reaching of a first end-of-stroke position by a portion of the rod, which detection means comprise at least a first switch mounted on a base element and connected with a line for feeding the fluid to the main cylinder, which switch is operable by said portion of the rod to substantially stop feeding of the fluid to the main cylinder and to automatically activate the stopping means, said first switch being fixable on the base element by adjustable positioning means so as to allow the first end-of-stroke position of the of the rod to be adjusted with respect to said cylinder in order to change the operational size of the device.

By virtue of these features, the device according to the invention has a flexible structure that can be adapted simply and quickly to allow the device to be associated with different working plants, or to be adapted to different working conditions.

Preferably, the adjustable positioning means comprise fastening means associated with a support body for supporting the first switch, which are adapted to engage corresponding formations of the base element in one of a plurality of positions.

In this manner, the adjustable positioning means of the first switch have a simple and reliable structure, inexpensive to be manufactured.

According to another preferred feature of the invention, the adjustable positioning means comprise spacing means of a calibrated thickness, adapted to be interposed between the first switch and said support body.

In this manner, the structure of the device can be adjusted to be adapted precisely to the operational size of different working plants.

Conveniently, the detection means comprise a second switch operable as a result of reaching by the rod of a second end-of-stroke position, opposite to said first end-of-stroke position, which is adapted to substantially stop feeding of said fluid to the main cylinder when the rod reaches said second end-of-stroke position.

In this manner, the device allows displacement of the rod to be effectively locked in both its opposite end-of-stroke positions.

According to still another preferred feature, said stopping means for stopping the rod comprise at least one first and at least one second mutually engageable shaped formations, preferably consisting of a first rack and of a second rack, one of which is slidably associated with the cylinder, and the other of which is connected to the rod of the cylinder.

In this manner, the structure of the device according to the invention is relatively simple and compact and highly reliable in the use and, in particular, it allows an automatic and immediate stop of the rod to be got at its opposite end-of-stroke positions, and also in any possible intermediate position, for example when an anomaly in the feeding system of the pressurized fluid occurs.

Further characteristics and advantages of the invention will be apparent from the following detailed description, provided purely as a non-limitative example and referred to the accompanying drawings, in which:

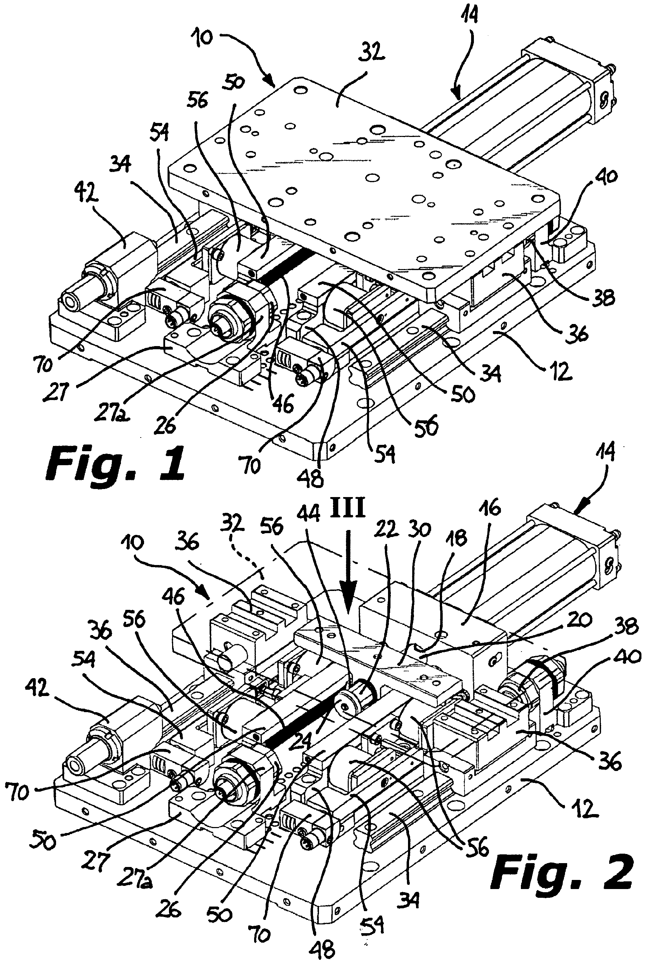

Figure 1 is an overall perspective view of a moving device according to the invention,
Figure 2 is a view similar to Figure 1, from which a platform for connecting an equipment to be moved by the device of the invention has been removed,

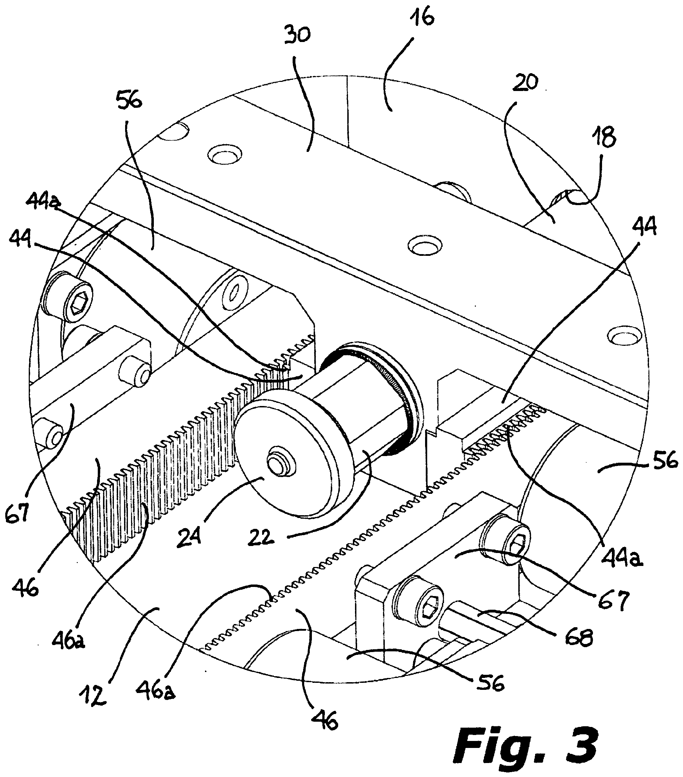

Figure 3 is an enlarged view of a detail indicated by arrow III of Figure 2,
Figures 4 and 5 are two different perspective views both showing, in an enlarged scale, a first switch of the device and a support thereof,
Figure 6 is a fragmentary top elevational view of the device of Figure 2, showing a first mode of moving the first switch to adjust an end-of-stroke position of the of the cylinder rod,
Figure 7 is a view similar to Figure 6, showing a second mode of moving the first switch,

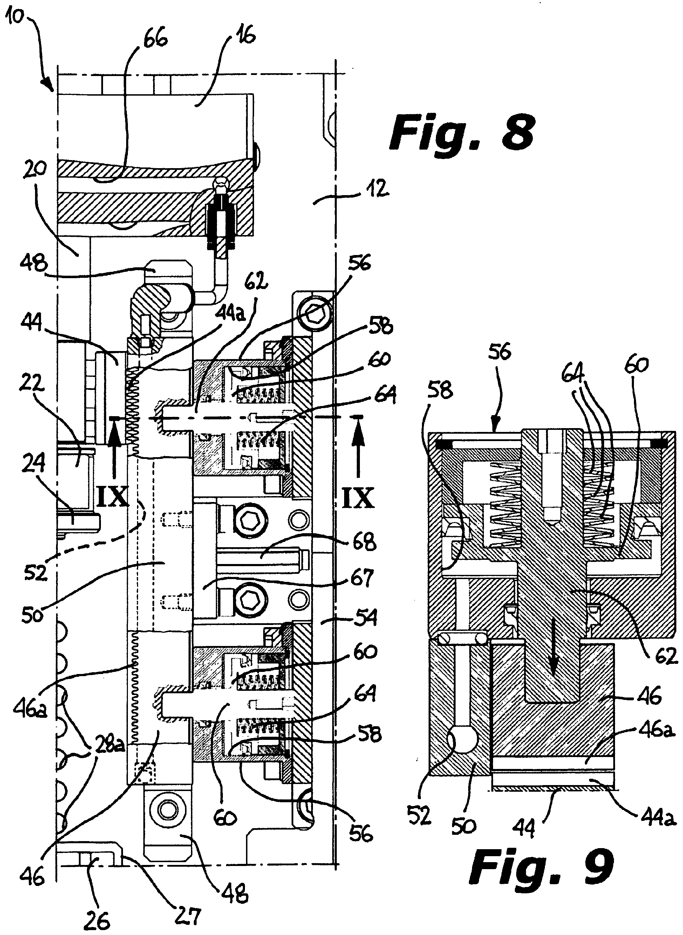

Figure 8 is a partially sectioned, enlarged and fragmentary top elevational view of part of the device of Figure 3,
Figure 9 is a front elevational view of a member sectioned along the line IX-IX of Figure 8, and
Figures 10 to 12 are schematic top elevational views of part of the device of the invention, showing successive steps of its operation.

With reference to the figures, 10 indicates as a whole a sled device according to the invention, which is intended to move an equipment (not shown in the figures), adapted, for example, to perform one or more machining on workpieces in a production line, between a pair of spaced-apart positions, typically an operative position and a resting position.

The device 10 comprises a base plate 12, for example having a rectangular shape, to which a control assembly is connected that includes essentially a cylinder 14 of a type known per se, usually of the pneumatic double-acting or single-acting type, fixed at one side of the plate 12. A pressurized gas, typically compressed air, is fed to the cylinder 14 for controlling the axial sliding of a rod 20 between a pair of opposite end-of-stroke positions.

The body of the cylinder 14 is fixed to a box-shaped body 16, fixed in turn to the plate 12, a through hole 18 being formed in the body 16, within which the rod 20 is slidably engaged, so that the linear movement of the rod 20 is guided by the hole 18 of the body 16.

The rod 20 has an end 22 that projects outside the body 16, on which a buffer 24 is applied. This buffer 24, as a result of the axial movement of the rod 20, can reach a number of possible positions each of which may corresponds to a possible extended end-of-stroke configuration of the rod 20. The buffer 24 is intended to engage in frontal contact a first switch 26 fixed to the base plate 12 by a substantially T-shaped support 27 having a branch 27a that extends transversely to the plate 12.

A plurality of legs 28 in the form of cylindrical pins, for example three legs 28, one central and two lateral, extend below the support 27, which are intended to engage corresponding smooth holes 28a formed in the plate 12. Moreover, at least one screw 29, for example two screws 29, is connected to the support 27, each of which is intended to be screwed into a corresponding threaded hole 29a of the plate 12. Preferably, the pitch of the smooth holes 28a and of the threaded holes 29a is 10 mm, and axial rows of holes 28a and 29a can be formed in the plate 12, each of which comprises, for example, six of such holes. Of course, the legs 28 and the screws 29, as well as the respective holes 28a and 29a, can be replaced by different adjustable positioning means of a type known per se, having an equivalent function.

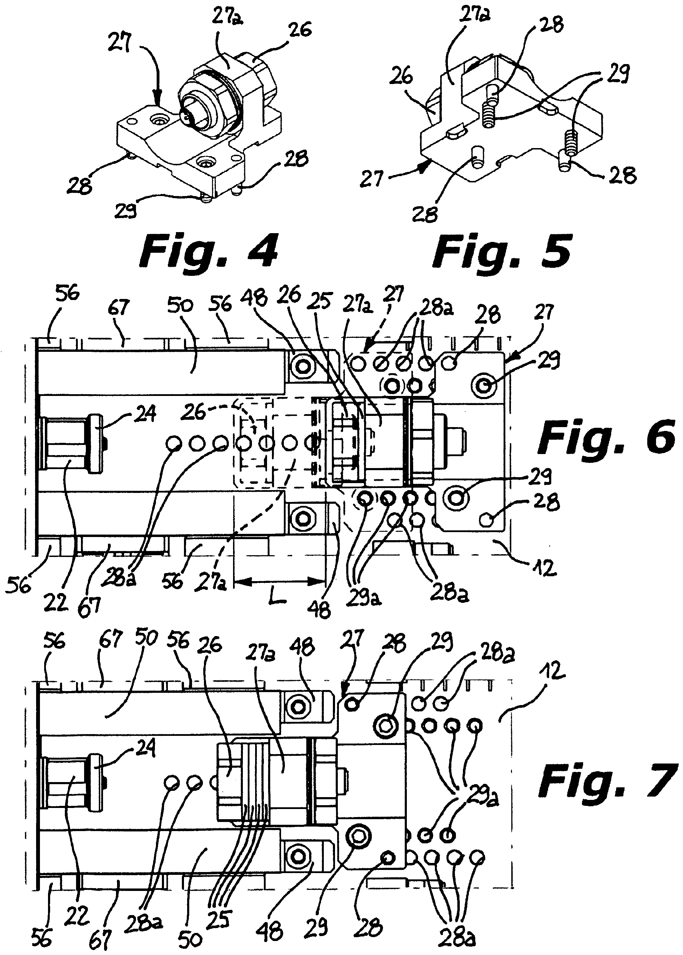

One or more preferably U-shaped spacer elements 25 (Figures 6 and 7) having a calibrated thickness, can be interposed between the transverse branch 27a of the support 27 and a head collar of the switch 26, which has for example a hexagonal shape, in order to allow the relative position of the switch 26 to be finely adjusted with respect to the support 27. Conveniently, spacer elements 25 of a variable thickness, from 1 to 3 mm, can be used, depending on the need.

In particular, the position of the switch 26 can be adjusted in two different modes, in order to change the relative end-of-stroke position of the rod 20 and, therefore, to adjust the operational size of the device 10.

According to a first mode of adjustment, the support 27 can be connected to the plate 12 in one of a plurality of possible axial positions (two of which are shown by continuous lines and by broken lines, respectively, in Figure 6) with respect to the cylinder 14. In this case, the support 27 can be mounted in an axial position, with respect to the cylinder 14, which is defined by a set of holes 28a and 29a of the plate 12, by the engagement of the legs 28 and of the screws 29 thereof into them. Thus, it can be obtained a displacement of the support 27, and therefore of the switch 26, of a length L (shown in Figure 6) of 10 mm or a multiple thereof, with respect to the position of the support 27 that corresponds to the maximum extension of the rod 20 with respect to the cylinder 14. In particular, in the case of rows of six holes 28a and 29a spaced of 10 mm one to the other, the support 27, and therefore the switch 26, can be moved of a maximum length of 60 mm with respect to the position thereof that corresponds to the maximum extension of the rod 20.

According to another mode of adjustment, that can be used as an alternative or in conjunction with the first mode of adjustment described above, one or more spacer elements 25 can be interposed between the head collar of the switch 26 and the branch 27a of the support 27, so as to finely adjust the axial position of the switch 26 with respect to the support 27, and therefore with respect to the cylinder 14.

A T-shaped bracket 30 is connected to the rod 20 in proximity of its end 22, a mobile platform 32, consisting for example of a rectangular plate, being fastened to such a bracket. The platform 32 is conveniently provided with connecting holes to allow the aforesaid equipment to be fastened, whereby the platform 32 and the equipment brought on it are fast to the rod 20.

A pair of rails 34 extending along directions parallel to the rod 20 are connected to the base plate 12, side by side to the rod 20, on each of which a respective trolley 36 is slidably mounted, which is fastened to the platform 32.

In proximity of one end of one of the rails 34, and in a position adjacent to the box-shaped body 16, a second switch 38 is fixed to the base plate 12 through an angular support 40, so that the trolley 36 slidable on this rail 34 can reach a condition of contact with the switch 38 when the rod 20 is in its fully retracted configuration with respect to the cylinder 14, which corresponds to the other end-of-stroke position of the rod 20.

Both the switches 26 and 38 are connected with a feeding line for feeding the fluid to the main cylinder 14, and they are conveniently made by micro-switches of the electro-mechanical type. In particular, they constitute detection means for detecting the reaching of the respective end-of-stroke positions by the rod 20.

As a result of the contact of the end 22 of the rod 20, on one side, and of one of the trolleys 36, on the other side, with the switch 26 and 38, respectively, that is when the rod 20 reaches its end-of-stroke positions, the switches 26 and 38 are switched to interrupt feeding of fluid to the cylinder 14, or to cause, at any rate, a reduction of its pressure below a predetermined threshold, as it will be explained below.

Moreover, the rail 34 arranged at the side opposite to that associated with the switch 38, preferably supports a damping unit 42 at its end opposite to the cylinder 14, for dampening the force of impact of the respective trolley 36, and therefore of the platform 32, when the rod 20 reaches its configuration of maximum extension with respect to the cylinder 14.

The device 10 also includes a stopping unit serving to lock automatically and instantaneously the movement of the rod 20 with respect to the cylinder 14, for example at its opposite end-of-stroke positions, by effect of the switching of the switches 26 and 38. This stopping unit comprises at least two mutually engageable shaped formations, one of which is slidably associated with respect to the base plate 12, and therefore with respect to the cylinder 14, while the other is connected to the rod 20.

Preferably, these shaped formations consist of a pair of opposite racks 44, equal to each other, which are fitted to the shaft 20 at a position adjacent to the bracket 30 in such a manner to extend along a direction parallel to the rod 20, with their teeth 44a facing radially outside the rod 20, and another pair of opposite racks 46, also equal to each other, which teeth 46a face the racks 44, and therefore the rod 20.

While the axial extension of the racks 46 substantially corresponds to the maximum admissible length of stroke of the rod 20 between the respective extreme end-of-stroke positions, the axial length of the racks 44 is substantially less than that of the racks 46.

Each opposite end of each rack 46 is connected to the plate 12 by a respective axial holding element 48, so that the racks 46 are slidably mounted radially to the rod 20, with a possibility of relative movement with respect to the rod.

A respective cover plate 50 is superimposed to each rack 46, into contact with the upper face of the latter and connected to it through the holding elements 48 thereof, with a possibility of relative sliding, whereby the plate 50 constitutes a guide for the radial sliding movement of the respective rack 46 according a to-and-fro movement with respect to the rod 20.

In order to control this radial sliding of the racks 46, with the aim of allowing their teeth 46a to reach the engagement or the disengagement condition with respect to the teeth 44a of the racks 44, actuating means are operatively interposed between each rack 46 and a respective support wall 54 fixed perpendicular to the plate 12, and therefore fast to the cylinder 14.

These actuating means include, for each rack 46, at least one control actuator 56, and preferably a pair of control actuators 56 each of which is arranged close to an axial end of the respective rack 46.

Each actuator 56 comprises a chamber 58 in which an auxiliary piston 60 is sealingly and slidably mounted, and from which a stem 62 extends, which is connected to the respective rack 46. The same pressurized fluid that is fed also to the cylinder 14, is fed into the chamber 58 from the side of the piston 60 facing the rack 46, while elastic thrust means, resting against a member connected to the respective wall 54, are arranged at the opposite side of the piston 60, these elastic means being preferably made by a pack of Belleville springs 64. The springs 64 allow a thrust to be applied on the piston 60 and therefore, through it, on the respective rack 46, with the aim of bringing the rack 46 into its frontal engagement condition with the respective rack 44. The load of the springs 64 is calculated so as the racks 46 can assume a position at least slightly spaced from the racks 44 when the pressure of the fluid fed to the chambers 58 of the actuators 56 exceeds a predetermined threshold.

In order to operatively connect the actuators 56 with the cylinder 14, their chambers 58 are connected with a channel 52 formed in the respective cover plates 50 superimposed to each rack 46, which channel is in turn connected through ducts to a manifold 66 formed in the box-shaped body 16, to which the fluid of the cylinder 14 is fed.

In the case of absence of pressure in the fluid fed to the chambers 58, or of a reduction of the pressure thereof below a predetermined threshold, which is calculated as a function of the thrust force of the springs 64, the actuators 56 cause the movement of the racks 46 to the engagement of the racks 44, in order to lock instantaneously, with a high accuracy, the sliding of the rod 20. In this manner, a load applied to the platform 32 from the equipment cannot cause the platform 32 to move further in the axial direction of the rod 20. In particular, this stopping condition of the rod 20 takes place when the switches 26 or 38 detect the contact with the buffer 24 of the rod 20, or with one of the trolleys 36, in the two opposite end-of-stroke positions of the rod 20, respectively. Furthermore, the movement of the rod 20 is stopped in the event of an interruption of the pressure of the fluid fed to the cylinder 14, or of a pressure drop thereof below the aforesaid predetermined threshold, and consequently in the chambers 58 of the actuators 56, which may occur owing to a malfunction in any position of the rod 20 between its end-of-stroke positions.

A plate 67 is fixed on the face of each rack 46 facing the respective wall 54, and therefore on the side opposite to the teeth 46a, from which plate a transverse pin 68 extends. The contact of the pin 68 with the wall 54 generates a signal detectable by a micro-switch 70, preferably of the inductive type, carried by the respective wall 54, to signal the movement of the respective rack 46 towards its disengagement position, therefore spaced, with respect to the respective rack 44. Conveniently, the micro-switches 70 are provided with visual signaling means, typically of the LED light type, for signaling actuation of the actuators 56.

Preferably, the teeth 44a of both the racks 44 are aligned with each other in the axial direction of the rod 20, while the teeth 46a of each of the racks 46 are offset to each other by half a pitch in the axial direction of the rod 20. This allows the rod 20 to be locked very quickly by virtue of the fact that locking of the stroke of the rod 20 takes place in one of a series of positions very close together, the interval of which corresponds to half a pitch between the teeth 44a and 46a. For example, for a pitch of 2 mm of the teeth of the racks 44 and 46, locking of the rod 20 caused by the stopping means can take place with intervals of 1 mm. In this case, for each locking condition of the rod 20, the engagement of only one of the two rack 44 with the respective rack 46 will be obtained. As an alternative, and in a similar manner, the teeth 44a of the two racks 44 may be arranged mutually offset by half a pitch in the axial direction of the rod 20, while the teeth 46a of the racks 46 are aligned with each other in the axial direction of the rod 20.

By virtue of the fact that the pair of actuators 56 of each rack 46 are connected in series with respect to the feeding of fluid to the cylinder 14, the device 10, in addition to being extremely effective in use, allows a reliable stopping of the movement of the rod 20 to be obtained in an extremely reduced time in the case of an accidental interruption of the feeding line of the fluid, for example as a result of a malfunction that may occur both in the main cylinder 14 or in any one of the branches through which the fluid is fed to the pair of actuators 56 that are associated with each rack 46.

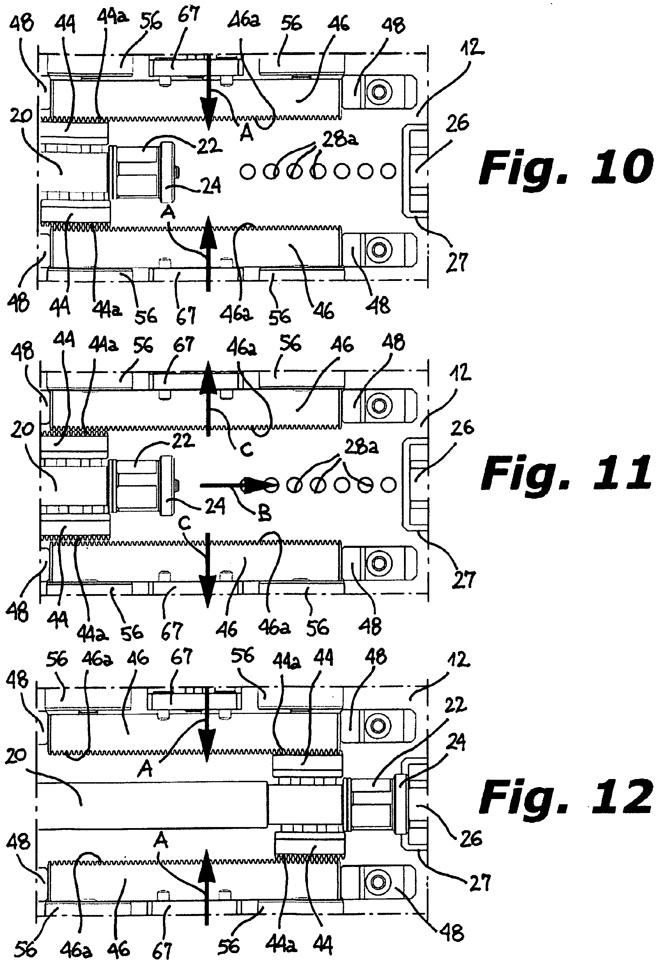

In operation of the device 10, for example starting from an initial condition in which the rod 20 is fully retracted and locked, as shown in Figure 10, there is no feeding of pressurized fluid to either the cylinder 14 or the actuators 56, since the switch 38 is in the switched configuration in which feeding of pressurized fluid is stopped. As a consequence, the actuators 56, owing to the elastic action of the springs 64, force the teeth 46 into engagement with the racks 44, along the direction indicated by arrows A of such a figure. Only the teeth 44a of one of the racks 44 mesh with the teeth 46a of the respective rack 46, while the teeth 44a of the other rack 44 reach a frontal abutment, in which their tops contact the tops of the teeth 46a of the respective rack 46, owing to the axial offset by half a pitch of the racks 44.

In this configuration, the position of the switch 26 could be adjusted at will with respect to the cylinder 14 to define precisely a desired and opposite end-of-stroke position of the rod 20. To this purpose, the support 27 may be arranged in one of a plurality of predefined positions, by the engagement of its legs 28 in the respective smooth holes 28a of the plate 12, and fastened in such a position by the engagement of the screws 29 in the threaded holes 29a of the plate 12.

Moreover, to achieve a fine and micrometrical adjustment of the position of the switch 26 with respect to the cylinder 14, one or more spacer elements 25 can be interposed between the transverse branch 27a of the support 27 and the head collar of the switch 26. For example, spacer elements 25 having a thickness of 1 mm, that is a thickness equal to half a pitch of the teeth of the racks 46 and 44, can be used, or spacer elements having a multiple thickness with respect to such half a pitch, for example 2 or 3 mm.

Then, the switch 38 is switched to its opposite condition in order to cause the axial extension of the rod 20 towards the switch 26 in the direction indicated by arrow B of Figure 11, by an electronic control unit (not shown, being of a type known per se) of the device 10, so as to control feeding of pressurized fluid to the cylinder 14. The same fluid is fed to the actuators 56, through the manifold 66 of the box shaped body 16 and the channels 52 of the cover plates 50 of the racks 46, so as to cause their pistons 60 to move, against the elastic action of the springs 64, and, together with them, the racks 46 to move in the direction of the arrows C, towards a position spaced from the racks 44, so as to disengage the teeth 44a and 46a of the racks 44 and 46, and to release the movement of the rod 20.

When the buffer 24 connected to the end 22 of the rod 20 reaches the condition of frontal contact with the switch 26, in the other end-of-stroke position of the rod 20, switching of the switch 26 controls again interruption of feeding of the fluid to the cylinder 20 and to the actuators 56. In this condition, the thrust action of the springs 64 of the actuators 56 causes the racks 46 to move along the direction of arrows A of this figure, toward the engagement with the racks 44. Also in this configuration, the teeth 44a of only one of the racks 44 mesh with the teeth 46a of the respective rack 46, while the tops of teeth 44a of the other rack 44 are arranged in frontal abutment against the tops of the teeth 46a of the respective rack 46.

In the case of an interruption or a pressure drop of the fluid below a threshold, in any of the positions of the rod 20 between its end-of-stroke positions, the resulting interruption of feeding of the fluid to the actuators 56, or a delivery thereof with a pressure lower than the predetermined threshold, causes the racks 46 to move towards the rod 20, owing to the action of the springs 64 of the actuators 56 and, consequently, the engagement of the teeth 44a of one rack 44 with the teeth 46a of the respective rack 46, causing the rod 20 to stop immediately and independently from the switching of the switches 26 and 38.

## Claims

1. Sled device for linearly moving an equipment, comprising a base element (12) that supports a control unit including a main cylinder (14) that can be operated by a pressurized fluid to cause a rod (20) of the cylinder (14) to be moved between two opposite spaced apart end-of-stroke positions, a movable platform (32) linearly movable together with said rod (20) and adapted to allow said equipment to be connected, and detection means (26, 38) for detecting the reaching of a first end-of-stroke position of the rod (20), which detection means (26, 38) comprise at least a first switch (26, 38) connected with a line for feeding the fluid to the main cylinder (14) and operable to substantially stop feeding of the fluid to the main cylinder (14), which switch (26, 38) is mounted on said base element (12) and can be fixed on it by adjustable positioning means (28, 28a, 29, 29a; 25) in order to allow the first end-of-stroke position of the rod (20) to be adjusted with respect to said cylinder (14),
**characterized in that** it includes stopping means (44, 46, 56) for locking the movement of the rod (20) with respect to the main cylinder (14), and **in that** said detection means allow the reaching of a first end-of-stroke position by a portion (22) of the rod (20) to be detected, said first switch (26, 38) being operable by said portion (22) of the rod (20) in order to automatically activate said stopping means (44, 46, 56), to change the operational size of the device (10).

2. Device according to claim 1, **characterized in that** said adjustable positioning means comprise fastening means (28, 29) associated with a support body (27) for supporting the first switch (26), which are adapted to engage corresponding formations (28a, 29a) of the base element (12) in one of a plurality of positions.

3. Device according to claim 2, **characterized in that** said fastening means comprise at least one leg (28) and/or at least one screw (29) that project from said support body (27), which can be engaged in a corresponding hole (28a, 29a) of the base element (12).

4. Device according to any one of claims 1 to 3, **characterized in that** said adjustable positioning means comprise spacing means (25) of a calibrated thickness, adapted to be interposed between the first switch (26) and said support body (27).

5. Device according to any of claims 1 to 4, **characterized in that** said detection means comprise a second switch (38) operable as a result of reaching by the rod (20) of a second end-of-stroke position, opposite to said first end-of-stroke position, which is adapted to substantially stop feeding of said fluid to the main cylinder (14) when the rod (20) reaches said second end-of-stroke position.

6. Device according to claim 5, **characterized in that** it comprises at least one rail (34) parallel to said rod (20), on which a trolley (36), fixed to said movable platform (32), is slidably mounted, and **in that** said first switch (26) is mounted in a front position with respect to an end (22) of said rod (20) that projects from the main cylinder (14), while the second switch (38) is arranged at a position adjacent to an end of said at least one rail (34).

7. Device according to any of claims 1 to 4, **characterized in that** said stopping means for stopping the rod (20) comprise at least one first and at least one second mutually engageable shaped formations (46, 44), one of which is slidably associated with the cylinder (14) and the other of which is connected to the rod (20) of the cylinder (14).

8. Device according to claim 7, **characterized in that** said at least one first and at least one second shaped formations consist of a first rack (46) and of a second rack (44).

9. Device according to claim 8, **characterized in that** each first rack (46) is radially slidable with respect to the rod (20), and **in that** each second rack (44) is fixed to the rod (20) in a position facing a respective first rack (46).

10. Device according to claim 9, **characterized in that** the axial extension of the first rack (46) corresponds substantially to the stroke of the rod (20) between said end-of-stroke positions, and **in that** the axial extension of said second rack (44) is substantially less than that of the first rack (46).

11. Device according to claim 9 or 10, **characterized in that** it comprises actuating means (56) to control sliding of each first rack (46), which are operatively interposed between said at least one first rack (46) and a part (54) stationary with respect to the main cylinder (14).

12. Device according to claim 11, **characterized in that** said actuating means (56) are able to cause said rod (20) to be stopped in any position thereof between said end-of-stroke positions.

13. Device according to any one of claims 8 to 12, **characterized in that** said stopping means includes a pair of first equal racks (46) facing each other at diametrically opposite sides with respect to the rod (20), and a pair of corresponding second racks (44) secured to the rod (20), each of which faces a respective first rack (46).

14. Device according to claim 13, **characterized in that** the teeth (46a) of the two first racks (46), or the teeth (44a) of the two second racks (44), are aligned with each other in the axial direction of the rod (20), while the teeth (44a) of the two second racks (44), or the teeth (46a) of the two first racks (46), are respectively offset with each other in the axial direction of the rod (46), by half a pitch.

15. Device according to any one of claims 11 to 14, **characterized in that** said actuating means include at least one fluid operated actuator (56) adapted to control sliding of said first rack (46), which actuator comprises a chamber (58) in which an auxiliary piston (60) is slidably and sealingly mounted, a stem (62) associated with the respective first rack (46) being connected to said piston, the same pressurized fluid fed to the main cylinder (14) being fed at a first side of the auxiliary piston (60), and elastic thrust means (64) being arranged at the opposite side of the auxiliary piston (60) to urge the auxiliary piston (60), together with the respective first rack (46), to the engagement with said second rack (44).

16. Device according to claim 15, **characterized in that** each control actuator (56) is connected, at said first side of the auxiliary piston (60), with a channel (52) for feeding the pressurized fluid, which channel (52) is formed in a cover plate (50) of the respective first rack (46), this cover plate (50) being arranged into contact with the first rack (46) with possibility of a relative sliding, so as to define guide means for guiding the first rack (46) to slide along a direction transverse to the rod (20).

17. Device according to claim 16, **characterized in that** each first rack (46) is associated with a pair of control actuators (56), each of which is arranged in proximity of a respective axial end of the first rack (46), the pressurized fluid being fed to each control actuator (56) through said channel (52).

18. Device according to claim 16 or 17, **characterized in that** the channel (52) of each cover plate (50) is connected to a manifold (66) for said fluid, which manifold (66) is formed in a guide body (16) for guiding the axial movement of the rod (20), which is arranged adjacent to said cylinder (14).

19. Device according to any one of claims 13 to 16, **characterized in that** each first rack (46) is associated with a sensor (68) adapted to detect the transverse sliding thereof with respect to said rod (20) owing to the action of said at least one fluid operated actuator (56), which sensor (66) is connected with a micro-switch (70), preferably of the inductive type, provided with visual signaling means for signaling operation of said at least one fluid operated actuator (56).

## Patentansprüche

1. Schlittenvorrichtung zum linearen Bewegen einer Ausrüstung, enthaltend ein Basiselement (12), das eine Steuereinheit mit einem Hauptzylinder (14) trägt, welcher durch ein unter Druck stehendes Fluid betätigt werden kann, um zu veranlassen, dass eine Stange (20) des Zylinders (14) zwischen zwei gegenüberliegenden voneinander beabstandeten Hubende-Stellungen bewegt wird, eine bewegliche Plattform (32), die zusammen mit der Stange (20) linear bewegbar ist und dazu ausgelegt ist, es zu ermöglichen, dass die Ausrüstung verbunden wird, und eine Erfassungsvorrichtung (26, 38) zum Erfassen des Erreichens einer ersten Hubende-Stellung der Stange (20), wobei die Erfassungsvorrichtung (26, 38) mindestens einen ersten Schalter (26, 38) enthält, der mit einer Leitung zum Zuführen des Fluids zum Hauptzylinder (14) verbunden ist, und der in der Lage ist, das Zuführen des Fluids zum Hauptzylinder (14) im Wesentlichen zu stoppen, wobei der Schalter (26, 38), auf dem Basiselement (12) montiert ist und darauf durch einstellbare Positionierungsmittel (28, 28a, 29, 29a; 25) befestigt werden kann, um es zu erlauben, die erste Hubende-Stellung der Stange (20) in Bezug zum Zylinder (14) einzustellen,
**dadurch gekennzeichnet, dass** sie Anschlagmittel (44, 46, 56) zum Blockieren der Bewegung der Stange (20) in Bezug zum Hauptzylinder (14) enthält, und dass die Erfassungsvorrichtung es ermöglicht, das Erreichen einer ersten Hubende-Stellung durch einen Abschnitt (22) der Stange (20) zu erfassen, wobei der erste Schalter (26, 38) durch den Abschnitt (22) der Stange (20) betätigbar ist, um die Anschlagmittel (44, 46, 56) zur Änderung der Betriebsgröße der Vorrichtung (10) automatisch zu aktivieren.

2. Vorrichtung nach Anspruch 1, **dadurch gekennzeichnet, dass** die einstellbaren Positionierungsmittel Befestigungsmittel (28, 29) umfassen, die mit einem Tragkörper (27) zum Tragen des ersten Schalters (26) verbunden sind, und dazu ausgelegt sind, mit entsprechenden Ausformungen (28a, 29a) des Basiselements (12) in einer von einer Vielzahl von Stellungen in Eingriff zu kommen.

3. Vorrichtung nach Anspruch 2, **dadurch gekennzeichnet, dass** die Befestigungsmittel mindestens einen Fuß (28) und/oder mindestens eine Schraube (29) umfassen, die vom Tragkörper (27) hervorstehen, und welche in ein entsprechendes Loch (28a, 29a) des Basiselements (12) eingreifen können.

4. Vorrichtung nach einem der Ansprüche 1 bis 3, **dadurch gekennzeichnet, dass** die einstellbaren Positionierungsmittel Beabstandungsmittel (25) mit einer kalibrierten Dicke umfassen, die geeignet sind, zwischen dem ersten Schalter (26) und dem Tragkörper (27) eingefügt zu werden.

5. Vorrichtung nach einem der Ansprüche 1 bis 4, **dadurch gekennzeichnet, dass** die Erfassungsvorrichtung einen zweiten Schalter (38) enthält, der betätigbar ist als ein Ergebnis des Erreichens einer zur ersten Hubende-Stellung entgegengesetzten zweiten Hubende-Stellung durch die Stange (20), der dazu ausgelegt ist, die Zuführung des Fluids zum Hauptzylinder (14) im Wesentlichen zu stoppen, wenn die Stange (20) die zweite Hubende-Stellung erreicht.

6. Vorrichtung nach Anspruch 5, **dadurch gekennzeichnet, dass** sie wenigstens eine Schiene (34) parallel zurr Stange (20) umfasst, auf der ein Wagen (36), der an der beweglichen Plattform (32) befestigt ist, verschiebbar angebracht ist, und dass der erste Schalter (26) in einer vorderen Position in Bezug zu einem Ende (22) der Stange (20) angebracht ist, das aus dem Hauptzylinder (14) herausragt, während der zweite Schalter (38) an einer Position angeordnet ist, welche benachbart zu einem Ende der wenigstens einen Schiene (34) ist.

7. Vorrichtung nach einem der Ansprüche 1 bis 4, **dadurch gekennzeichnet, dass** die Anschlagmittel zum Stoppen der Stange (20) wenigstens eine erste und wenigstens eine zweite gestaltete Ausformung (46, 44) aufweisen, die gegenseitig in Eingriff bringbar sind, wobei eine derselben verschiebbar mit dem Zylinder (14) verbunden ist und die andere derselben mit der Stange (20) des Zylinders (14) verbunden ist.

8. Vorrichtung nach Anspruch 7, **dadurch gekennzeichnet, dass** die mindestens eine erste und die mindestens eine zweite gestaltete Ausformung aus einer ersten Zahnstange (46) und einer zweiten Zahnstange (44) bestehen.

9. Vorrichtung nach Anspruch 8, **dadurch gekennzeichnet, dass** jede erste Zahnstange (46) in Bezug zur Stange (20) radial verschiebbar ist, und dass jede zweite Zahnstange (44) in einer einer jeweiligen ersten Zahnstange (46) zugewandten Stellung an der Stange (20) befestigt ist.

10. Vorrichtung nach Anspruch 9, **dadurch gekennzeichnet, dass** die axiale Erstreckung der ersten Zahnstange (46) im Wesentlichen dem Hub der Stange (20) zwischen den Hubende-Stellungen entspricht, und dass die axiale Erstreckung der zweiten Zahnstange (44) wesentlich geringer ist als die der ersten Zahnstange (46).

11. Vorrichtung nach Anspruch 9 oder 10, **dadurch gekennzeichnet, dass** sie Betätigungsmittel (56) umfasst, um das Verschieben jeder ersten Zahnstange (46) zu steuern, welche operativ zwischen der wenigstens einen ersten Zahnstange (46) und einem Teil (54), der in Bezug zum Hauptzylinder (14) stationär ist, wirksam eingefügt sind.

12. Vorrichtung nach Anspruch 11, **dadurch gekennzeichnet, dass** die Betätigungsmittel (56) in der Lage sind, zu bewirken, dass die Stange (20) in einer beliebigen Stellung derselben zwischen den Hubende-Stellungen gestoppt wird.

13. Vorrichtung nach einem der Ansprüche 8 bis 12, **dadurch gekennzeichnet, dass** die Anschlagmittel ein Paar erster gleicher Zahnstangen (46), die einander an in Bezug zur Stange (20) diametral gegenüberliegenden Seiten zugewandt sind, und ein Paar von entsprechenden zweiten Zahnstangen (44) umfassen, die an der Stange (20) befestigt sind und von welchen jede einer jeweiligen ersten Zahnstange (46) zugewandt ist.

14. Vorrichtung nach Anspruch 13, **dadurch gekennzeichnet, dass** die Zähne (46a) der zwei ersten Zahnstangen (46) oder die Zähne (44a) der zwei zweiten Zahnstangen (44) zueinander in der axialen Richtung der Stange (20) ausgerichtet sind, während die Zähne (44a) der zwei zweiten Zahnstangen (44) oder die Zähne (46a) der zwei ersten Zahnstangen (46), in der axialen Richtung der Stange (46) jeweils um eine halbe Teilung gegeneinander versetzt sind.

15. Vorrichtung nach einem der Ansprüche 11 bis 14, **dadurch gekennzeichnet, dass** die Betätigungsmittel mindestens einen fluidbetriebenen Aktuator (56) enthalten, der dazu ausgelegt ist, das Verschieben der ersten Zahnstange (46) zu steuern, wobei der Aktuator eine Kammer (58) enthält, in der ein Hilfskolben (60) verschiebbar und dichtend montiert ist, wobei ein mit der jeweiligen ersten Zahnstange (46) verbundener Bolzen (62) mit dem Kolben verbunden ist, wobei das gleiche unter Druck stehende Fluid, das dem Hauptzylinder (14) zugeführt wird, einer ersten Seite des Hilfskolbens (60) zugeführt wird, und wobei an der gegenüberliegenden Seite des Hilfskolbens (60) elastische Schubmittel (64) angeordnet sind, um den Hilfskolben (60) zusammen mit der jeweiligen ersten Zahnstange (46) in den Eingriff mit der zweiten Zahnstange (44) zu drängen.

16. Vorrichtung nach Anspruch 15, **dadurch gekennzeichnet, dass** jeder Steueraktuator (56) an der ersten Seite des Hilfskolbens (60) mit einem Kanal (52) für das Zuführen des unter Druck stehende Fluids verbunden ist, wobei der Kanal (52) in einer Deckplatte (50) der jeweiligen ersten Zahnstange (46) ausgebildet ist, wobei diese Deckplatte (50) in Kontakt mit der ersten Zahnstange (46) mit der Möglichkeit einer Relativverschiebung angeordnet ist, so dass Führungsmittel zum Führen der ersten Zahnstange (46) zum Verschieben entlang einer Richtung quer zu der Stange (20) definiert werden.

17. Vorrichtung nach Anspruch 16, **dadurch gekennzeichnet, dass** jede erste Zahnstange (46) mit einem Paar von Steueraktuatoren (56) verbunden ist, von welchen jeder in der Nähe eines jeweiligen axialen Endes der ersten Zahnstange (46) angeordnet ist, wobei das unter Druck stehende Fluid jedem Steueraktuator (56) durch den Kanal (52) zugeführt wird.

18. Vorrichtung nach Anspruch 16 oder 17, **dadurch gekennzeichnet, dass** der Kanal (52) jeder Deckplatte (50) mit einem Verteiler (66) für das Fluid verbunden ist, wobei der Verteiler (66) in einem Führungskörper (16) zur Führung der axialen Bewegung der Stange (20), der benachbart zum Zylinder (14) angeordnet ist, ausgebildet ist.

19. Vorrichtung nach einem der Ansprüche 13 bis 16, **dadurch gekennzeichnet, dass** jede erste Zahnstange (46) mit einem Sensor (68) verbunden ist, der dazu ausgelegt ist, deren Querverschiebung in Bezug zur Stange (20) aufgrund der Aktion des mindestens einen fluidbetriebenen Aktuators (56) zu erfassen, wobei der Sensor (66) mit einem Mikroschalter (70) verbunden ist, vorzugsweise vom induktiven Typ ist, und mit optischen Signalisierungsmitteln zum Signalisieren des Betriebs des wenigstens einen fluidbetätigten Aktuators (56) ausgestattet ist.

## Revendications

1. Dispositif à coulissement pour le déplacement linéaire d'un équipement, comprenant un élément (12) formant embase qui supporte une unité de commande comprenant un vérin principal (14) qui peut être actionné par un fluide sous pression de telle sorte qu'une tige (20) du vérin (14) soit déplacée entre deux positions de fin de course espacées opposées, une plate-forme mobile (32) apte à être déplacée linéairement en même temps que ladite tige (20) et adaptée pour permettre audit équipement d'être raccordé, et des moyens de détection (26, 38) pour détecter le fait que la tige (20) atteint une première position de fin de course, lesdits moyens de détection (26, 38) comprenant au moins un premier commutateur (26, 38) relié à une ligne d'alimentation du vérin principal (14) en fluide et apte à être actionné pour substantiellement arrêter l'alimentation du fluide vers le vérin principal (14), lequel commutateur (26, 38) est monté sur ledit élément (12) formant embase et peut être fixé lui par des moyens de positionnement réglables (28, 28a, 29, 29a; 25) afin de permettre que la première position de fin de course de la tige (20) soit réglée par rapport audit vérin (14),
**caractérisé en ce qu'**il comporte des moyens d'arrêt (44, 46, 56) pour verrouiller le déplacement de la tige (20) par rapport au vérin principal (14), et **en ce que** lesdits moyens de détection permettent qu'une portion (22) de la tige (20) destinée à être détectée atteigne une première position de fin de course, ledit premier commutateur (26, 38) étant destiné à être actionné par ladite portion (22) de la tige (20) de façon à activer automatiquement lesdits moyens d'arrêt (44, 46, 56), afin de modifier la taille de fonctionnement du dispositif (10).

2. Dispositif selon la revendication 1, **caractérisé en ce que** lesdits moyens de positionnement réglables comprennent des moyens de fixation (28, 29) associés à un corps de support (27) pour supporter le premier commutateur (26), qui sont adaptés pour venir en engagement avec des formations correspondantes (28a, 29a) de l'élément (12) formant embase dans une position faisant partie d'une pluralité de positions.

3. Dispositif selon la revendication 2, **caractérisé en ce que** lesdits moyens de fixation comprennent au moins une patte (28) et / ou au moins une vis (29) faisant saillie dudit corps de support (27), qui peuvent être engagées dans un trou correspondant (28a, 29a) de l'élément (12) formant embase.

4. Dispositif selon l'une quelconque des revendications 1 à 3, **caractérisé en ce que** lesdits moyens de positionnement réglables comprennent des moyens d'espacement (25) d'une épaisseur calibrée, adaptés pour être interposés entre le premier commutateur (26) et ledit corps de support (27).

5. Dispositif selon l'une quelconque des revendications 1 à 4, **caractérisé en ce que** lesdits moyens de détection comprennent un deuxième interrupteur (38) apte à être actionné à la suite de l'atteinte par la tige (20) d'une deuxième position de fin de course, opposée à ladite première position de fin de course, qui est adaptée pour arrêter sensiblement l'alimentation dudit fluide vers le vérin principal (14) lorsque la tige (20) atteint ladite deuxième position de fin de course.

6. Dispositif selon la revendication 5, **caractérisé en ce qu'**il comprend au moins un rail (34) parallèle à ladite tige (20), sur lequel un chariot (36), fixé à ladite plate-forme mobile (32), est monté de façon coulissante, et **en ce que** ledit premier commutateur (26) est monté dans une position avant par rapport à une extrémité (22) de ladite tige (20) qui fait saillie du vérin principal (14), tandis que le deuxième commutateur (38) est disposé à une position adjacent à une extrémité dudit au moins un rail (34).

7. Dispositif selon l'une quelconque des revendications 1 à 4, **caractérisé en ce que** lesdits moyens d'arrêt pour arrêter la tige (20) comprennent au moins une première et au moins une deuxième formations (46, 44) conformées pour venir mutuellement en prise, dont l'une est associée de manière coulissante au vérin (14) et dont l'autre est reliée à la tige (20) du vérin (14).

8. Dispositif selon la revendication 7, **caractérisé en ce que** ladite au moins une première et au moins une deuxième formations conformées se composent d'une première crémaillère (46) et d'une deuxième crémaillère (44).

9. Dispositif selon la revendication 8, **caractérisé en ce que** chaque première crémaillère (46) peut coulisser radialement par rapport à la tige (20), et **en ce que** chaque deuxième crémaillère (44) est fixée à la tige (20) dans une position faisant face à une première crémaillère (46) respective.

10. Dispositif selon la revendication 9, **caractérisé en ce que** l'extension axiale de la première crémaillère (46) correspond sensiblement à la course de la tige (20) entre lesdites positions de fin de course, et **en ce que** l'extension axiale de ladite deuxième crémaillère (44) est sensiblement inférieure à celle de la première crémaillère (46).

11. Dispositif selon la revendication 9 ou la revendication 10, **caractérisé en ce qu'**il comprend des moyens d'actionnement (56) pour commander le coulissement de chaque première crémaillère (46) qui sont fonctionnellement interposés entre ladite au moins une première crémaillère (46) et une partie (54) fixe par rapport au vérin principal (14).

12. Dispositif selon la revendication 11, **caractérisé en ce que** lesdits moyens d'actionnement (56) sont aptes à amener ladite tige (20) à être arrêtée dans une position quelconque de celle-ci entre lesdites positions de fin de course.

13. Dispositif selon l'une quelconque des revendications 8 à 12, **caractérisé en ce que** lesdits moyens d'arrêt comprennent une paire de premières crémaillères (46) égales, placées en face l'une de l'autre sur des côtés diamétralement opposés par rapport à la tige (20), et une paire de deuxièmes crémaillères (44) correspondantes, fixées à la tige (20), dont chacune est en face d'une première crémaillère respective (46).

14. Dispositif selon la revendication 13, **caractérisé en ce que** les dents (46a) des deux premières crémaillères (46) ou les dents (44a) des deux deuxièmes crémaillères (44) sont alignées les unes avec les autres dans la direction axiale la tige (20), tandis que les dents (44a) des deux deuxièmes crémaillères (44) ou les dents (46a) des deux premières crémaillères (46) sont respectivement décalées les unes par rapport aux autres dans la direction axiale de la tige (46) par un demi-pas.

15. Dispositif selon l'une quelconque des revendications 11 à 14, **caractérisé en ce que** lesdits moyens d'actionnement comprennent au moins un actionneur (56) actionné par un fluide, apte à commander le coulissement de ladite première crémaillère (46), lequel actionneur comprend une chambre (58) dans laquelle un piston auxiliaire (60) est monté de façon coulissante et étanche, une tige (62) associée à la première crémaillère respective (46) étant reliée audit piston, le même fluide sous pression que celui introduit dans le vérin principal (14) étant introduit sur un premier côté du piston auxiliaire (60), et des moyens de poussée élastique (64) étant disposés sur le côté opposé du piston auxiliaire (60) pour presser le piston auxiliaire (60), de même que la première crémaillère (46) respective, pour une venue en engagement avec ladite deuxième crémaillère (44).

16. Dispositif selon la revendication 15, **caractérisé en ce que** chaque actionneur de commande (56) est raccordé, au niveau dudit premier côté du piston auxiliaire (60), avec un conduit (52) pour amener le fluide sous pression, lequel conduit (52) est formé dans une plaque de recouvrement (50) de la première crémaillère respective (46), cette plaque de recouvrement (50) étant disposée en contact avec la première crémaillère (46) avec possibilité d'un glissement relatif, de manière à définir des moyens de guidage pour guider la première crémaillère (46) de façon à ce qu'elle coulisse le long d'une direction transversale à la tige (20).

17. Dispositif selon la revendication 16, **caractérisé en ce que** chaque première crémaillère (46) est associée à une paire d'actionneurs de commande (56), dont chacun est disposé à proximité d'une extrémité axiale respective de la première crémaillère (46), le fluide sous pression étant alimenté à chaque actionneur de commande (56) à travers ledit conduit (52).

18. Dispositif selon la revendication 16 ou 17, **caractérisé en ce que** le conduit (52) de chaque plaque de recouvrement (50) est relié à un collecteur (66) pour ledit fluide, lequel collecteur (66) est formée dans un corps de guidage (16) pour guider le mouvement axial de la tige (20) qui est disposé de façon adjacente audit vérin (14).

19. Dispositif selon l'une quelconque des revendications 13 à 16, **caractérisé en ce que** chaque première crémaillère (46) est associé à un capteur (68) adapté pour détecter le glissement transversal de celui-ci par rapport à ladite tige (20) du fait de l'action dudit au moins un fluide d'actionnement mis en oeuvre (56), lequel capteur (66) est relié à un micro-interrupteur (70), de préférence du type inductif, pourvu d'un moyen de signalisation visuelle, pour signaler l'actionnement dudit au moins un actionneur (56) actionné par un fluide.
